Europäisches Patentamt

European Patent Office

Office européen des brevets

(11) Veröffentlichungsnummer: **0 039 787**
**B1**

# (12) EUROPÄISCHE PATENTSCHRIFT

(45) Veröffentlichungstag der Patentschrift:
**06.07.83**

(21) Anmeldenummer: 81102721.8

(22) Anmeldetag: **10.04.81**

(51) Int. Cl.³: **C 08 F 232/00,** C 08 F 238/00 //
(C08F232/00,
238/00),(C08F238/00, 232/00)

(54) Verfahren zur Herstellung von Cyclopentadien-Copolymerisaten.

(30) Priorität: **08.05.80 DE 3017619**

(43) Veröffentlichungstag der Anmeldung:
**18.11.81 Patentblatt 81/46**

(45) Bekanntmachung des Hinweises auf die Patenterteilung:
**06.07.83 Patentblatt 83/27**

(84) Benannte Vertragsstaaten:
**AT BE DE FR GB IT NL**

(56) Entgegenhaltungen:
**DE-A-2 522 080**

(73) Patentinhaber: **BASF Aktiengesellschaft,
Carl-Bosch-Strasse 38, D-6700 Ludwigshafen (DE)**

(72) Erfinder: **Hoene, Richard, Dr., Goerresstrasse 27,
D-6900 Heidelberg (DE)**

BUNDESDRUCKEREI BERLIN

# 0 039 787

## Verfahren zur Herstellung von Cyclopentadien-Copolymerisaten

Die vorliegende Erfindung betrifft ein Verfahren zur Herstellung von Cyclopentadiencopolymerisaten aus Cyclopentadien oder dessen Derivaten und acetylenisch ungesättigten Verbindungen.

Durch thermisch angeregte Polycycloaddition lassen sich auf Basis von Cyclopentadieneinheiten Kohlenwasserstoff-Harze herstellen, die an den Endgruppen C=C Doppelbindungen tragen. Es hat nicht an Versuchen gefehlt, Cyclopentadien-Harze auch mit anderen funktionellen Gruppen auszustatten; das bekannteste Verfahren ist das der Umsetzung mit Maleinsäureanhydrid. Zur Einführung von Ester- oder Hydroxylgruppen wurde empfohlen, Dicyclopentadien mit (Meth-)Acrylestern, Vinylestern oder Allylverbindungen zu copolymerisieren. Der Anteil an funktionellen Gruppen im Polymeren ist aber dadurch beschränkt, daß die Comonomeren weitgehend endständig eingebaut werden und daß die primären Cycloadditionsprodukte aus Vinylverbindung und Cyclopentadien oft eine niedrigere Reaktivität aufweisen, so daß sie schlecht einpolymerisieren. Demzufolge sind die z. B. mit hydroxylfunktionellen Monomeren erreichbaren OH-Zahlen relativ gering.

Aufgabe der vorliegenden Erfindung ist es, ein verbessertes Verfahren zur Herstellung von Cyclopentadien-Copolymerisaten durch thermische Polymerisation unter Verwendung von für diesen Zweck neuen geeigneten Comonomeren zu finden.

Diese Aufgabe wurde erfindungsgemäß durch den Einsatz acetylenisch ungesättigter Verbindungen gelöst.

Gegenstand der vorliegenden Erfindung ist ein Verfahren zur Herstellung von Cyclopentadiencopolymerisaten, das dadurch gekennzeichnet ist, daß

a) 10 bis 99 Gew.-% Cyclopentadien, Dicyclopentadien, Tri-, Tetracyclopentadien, deren $C_1$- bis $C_3$-Alkylderivate oder Codimere des Cyclopentadiens mit 4 bis 5 Kohlenstoffatome enthaltenden Dienen,
b) 1 bis 50 Gew.-% acetylenisch ungesättigte Verbindungen sowie
c) 0 bis 40 Gew.-% anderer copolymerisierbarer olefinisch ungesättigter Monomerer,

mit der Maßgabe, daß die Summe der unter a) bis c) genannten Prozentzahlen 100 ist, bei 200 bis 320° C miteinander umgesetzt werden.

Eine Ausführungsform des erfindungsgemäßen Verfahrens besteht darin, daß die Komponenten a), b) und c) gegebenenfalls zunächst einer Diels-Alder-Reaktion unterworfen, und dann bei 200 bis 320° C thermisch oder unter Zusatz von Radikalbildnern polymerisiert werden.

Als acetylenisch ungesättigte Verbindung (b) kommen neben Acetylen solche Verbindungen in Betracht, die neben mindestens einer Alkinylgruppe mindestens eine Hydroxyl-, Amino-, Carboxyl-, Aldehyd-, Alkyl-, Aryl-, Aralkylgruppe oder einen Halogenrest enthalten.

Zu dem erfindungsgemäßen Verfahren und den hierfür zu verwendenden Aufbaukomponenten ist im einzelnen folgendes auszuführen.

(a) Als Komponente (a) kommen Cyclopentadien, Di-, Tri- und Tetracyclopentadien, deren $C_1$- bis $C_3$-Alkyl-, insbesondere Methylderivate, sowie Codimere des Cyclopentadiens mit 4 bis 5 Kohlenstoffatome enthaltenden Dienen sowie Gemische dieser Verbindungen in Betracht. Zweckmäßigerweise werden im allgemeinen Gemische verwendet, wie sie aus der $C_5$-Fraktion der Dampfphasencrackung von Mineralöl nach Dimerisierung und Abtrennung der flüchtigen Anteile anfallen. Derartige Gemische enthalten als Hauptbestandteil Dicyclopentadien, als Nebenbestandteile Cyclopentadien, Tri-, Tetracyclopentadien, Codimere des Cyclopentadiens mit Diolefinen wie Butadien, Isopren, Piperylen, oder die entsprechenden von Methylcyclopentadien abgeleiteten Verbindungen.

Es ist dabei in der Regel nicht erforderlich, auf eine besondere Reinheit der Dicyclopentadienfraktion zu achten; eine Reinheit von 85 Gew.-% sollte jedoch üblicherweise nicht unterschritten werden. Die Monomeren (a) werden im allgemeinen in einer Menge von 10 bis 99, vorzugsweise 30 bis 95 Gew.-% der gesamten Monomeren (a), (b), (c) eingesetzt.

(b) Als acetylenisch ungesättigte Verbindungen (b) kommen z. B. Acetylen, Propin, Butin; Carboxylgruppen enthaltende Derivate des Acetylens, wie z. B. Propiolsäure, Acetylendicarbonsäure; Hydroxylgruppen enthaltende Acetylenderivate, wie z. B. Propargylalkohol, Butin-2-diol-1,4, Hexin-3-diol-2,5, Butin-1-ol-3, 2-Methyl-butin-3-ol, 2,3-Methylpentin-1-ol-3, 3,4-Dimethylpentin-1-ol-3, 3-Ethylpentin-1-ol-3, 3-Isopropyl-4-methylpentin-1-ol-3, 3-Methylhexin-1-ol-3, 3-Propylhexin-1-ol-3, Dehydrolinalool, 1-Ethinylcyclohexanol; Aminogruppen enthaltende Acetylenderivate wie 1,1-Dimethylpropin-2-ylamin, 1,1-Diethylpropin-2-ylamin, 1-Ethinylcyclohexylamin, 4-Diethylaminobutin-2-ol-1, 5-Diethylaminopentin-3-ol, Halogenderivate wie Propargylchlorid, Butin-3-chlorid-2 in Frage, wobei Propargylalkohol, Butin-2-diol-1,4, 1-Ethinylcyclohexanol, Acetylendicarbonsäure, 1-Ethinylcyclohexylamin, 4-Diethylamino-butin-2-ol-1, 5-Diethylaminopentin-3-ol-2, 2-Methylbutin-3-ol-2, Butin-3-chlorid-2, Propargylchlorid besonders bevorzugt sind.

Der Mengenbereich der Monomeren b) beträgt 1 bis 50, vorzugsweise 3 bis 40 Gew.-%.

(c) Als Monomere (c) eignen sich die üblichen olefinisch ungesättigten mit Cyclopentadien copolymerisierbaren Monomeren. Dazu gehören $\alpha,\beta$-olefinisch ungesättigte Carbonsäureeinheiten enthaltende Verbindungen wie (Meth)Acrylsäure, Maleinsäureanhydrid, Malein-, Fumar-, Itaconsäure, deren Mono- und Diester mit $C_1-C_{18}$-Alkanolen, deren Imide und Halbamide, die sich von $NH_3$, primären und sekundären Alkyl- oder Alkanolaminen ableiten; olefinisch ungesättigte Nitrile wie Acrylnitril; (Meth)Acrylester von Alkanolen mit 1 bis 20, vorzugsweise bis 12 C-Atomen, wie z. B. Methyl(meth)acrylat, Hydroxyalkyl(meth)acrylate, wie z. B. Hydroxypropyl-, Hydroxyethylacrylat, Glycidyl(meth)acrylat; Vinylester, wie Vinylformiat, Vinylacetat, Allylverbindungen wie Allylalkohol, -amin, -acetat, -glycidylether, -chlorid, Butenol, Butendiol; Vinylhalogenide, wie Vinylchlorid, Vinylether, wie Methyl, Ethyl-, Hydroxybutylvinylether; Mono- oder Diolefine wie Ethylen, Propen, Buten, Penten, (Cyclo) Hexen, Dodecen, Octadecen, Diene, wie Butadien, Isopren, Piperylen, Hexadien; ungesättigte Fettsäuren und deren Derivate wie Öl-, Linol-, Linolensäure, deren Glyceride wie Lein-, Fisch-, Soja-, Holz-, Ricinus-, Tallöl, synthetische Öle wie Polybutadienöl, natürliche und synthetische ungesättigte Harze wie Kolophonium und Kohlenwasserstoffharze, die z. B. aus $C_5$- oder $C_9$-Schnitten durch kationische Polymerisation erhalten werden. Der Anteil der Monomeren (c) beträgt im allgemeinen 0 bis 40 Gew.-%, bezogen auf das gesamte Monomerengemisch.

Die Herstellung der Polymerisate erfolgt bei Temperaturen von 200 bis 320°C, wobei Drucke zwischen 3 und 200 bar erreicht werden. Unterhalb des Temperaturbereiches läuft die Harzbildung nur unvollständig ab; oberhalb 320°C können Vernetzungsreaktionen auftreten. Der Temperaturbereich zwischen 230 bis 290°C wird im allgemeinen bevorzugt.

Es besteht die Möglichkeit, die Polymerisate in Abwesenheit oder in Gegenwart von Lösungsmitteln herzustellen; in der Regel bewirken Lösungsmittel die Absenkung von Molekulargewicht und Erweichungspunkt. Gewöhnlich verwendet man inerte Lösungsmittel, z. B. Aromaten wie Benzol, Toluol, Xylole, aliphatische Kohlenwasserstoffe wie z. B. Benzine oder Cyclohexan, Ketone wie z. B. Aceton, Methylethylketon, Ether wie z. B. Tetrahydrofuran, Ester wie z. B. Ethylacetat, Etherester, wie z. B. Butylglycolacetat, chlorierte Kohlenwasserstoffe wie Methylen-, Ethylen-, Propylenchlorid, Chlorbenzol sowie Gemische derartiger Lösungsmittel. Auch Lösungsmittel oder reaktionsfähige Begleitstoffe mit funktionellen Gruppen wie z. B. Alkohole, Phenole, Epoxide können gegebenenfalls mitverwendet werden.

Die Verwendung von Inertgasen wie z. B. $N_2$ ist günstig, aber nicht zwingend erforderlich.

Es ist möglich, die Reaktionsausbeuten durch Verwendung von Radikalbildnern wie Peroxiden, Hydroperoxiden, Perestern oder Azoverbindungen zu erhöhen, doch ist im allgemeinen deren Verwendung nicht unbedingt erforderlich.

Die für die Herstellung der Harze erforderlichen Reaktionszeiten betragen üblicherweise wenige Minuten bis einige Stunden; als technische Verfahren eignen sich sowohl die kontinuierliche wie die diskontinuierliche Reaktionsführung. Wie auf bekannte Weise die bereits bekannten Kohlenwasserstoff-Harze, lassen sich auch die erfindungsgemäßen Produkte durch Hydrierung, Maleinierung, Veresterung, Umsetzung mit Phenolen oder Phenolharzen, Salzbildung, Epoxidierung oder Verkochung mit ungesättigten Ölen weiter modifizieren, um sie den gewünschten Anwendungszwecken anzupassen, insbesondere eignet sich die Hydrierung zur Herstellung heller geruchsarmer Harze mit guter Löslichkeit in polaren wie unpolaren Lösungsmitteln, wobei ggf. auch die funktionellen Gruppen verändert werden können.

Nach der Polymerisation und ggf. weiteren Modifikation werden die Harze ggf. im Vakuum bei erhöhter Temperatur entgast, wobei starker Einfluß vor allem auf die Höhe des resultierenden Erweichungspunktes genommen werden kann. Die niedermolekularen Destillate können ggf. wieder der Reaktion zugeführt werden, was sich vor allem bei einer kontinuierlichen Verfahrensweise empfiehlt.

Die erfindungsgemäßen Produkte besitzen im allgemeinen Erweichungspunkte bis zu 200°C, Molekulargewichte zwischen 300 und 1500 und Hydrierjodzahlen zwischen 20 und 200. Sie bzw. ihre Modifizierungsprodukte sind für vielfältige Anwendungsmöglichkeiten geeignet, z. B. als Harzzusätze für Lacke, Tackifier für Klebstoffe oder Harze für Druckfarben. Die OH-Gruppen enthaltenden Harze können auch als Polyester- oder Polyurethankomponenten verwendet werden. Die COOH-Gruppenhaltigen Harze eignen sich insbesondere für die Verwendung in (ungesättigten) Polyestern oder — wie auch die Harze mit funktionellen Aminogruppen — als Bestandteile für Epoxidharzmassen oder als Leimungsmittel.

Die nachstehend aufgeführten Beispiele veranschaulichen die Verfahrensweise der Erfindung, ohne sie einzuschränken.

Die in den Beispielen aufgeführten Kenndaten der Produkte werden wie angegeben bestimmt.

Jod-Zahl (JZ):
Katalytische Hydrierung am Pd-Kontakt in Tetrahydrofuran; Angaben der äquivalenten Menge Jod in mg/100 g Substanz.
Erweichungspunkt (EP):

3

Bestimmung auf der Kofler-Heizbank. Dabei wird diejenige Temperatur der Heizplatte angegeben, bei welcher die Harzprobe anzukleben beginnt.

Molekulargewicht ($\overline{M}_n$):

Bestimmung durch Dampfdruckosmometrie in Benzol nach Elias, Makromoleküle, Hüthig und Wepf Verlag 1971, Seiten 229 – 238.

Säurezahl (SZ):

Methode nach DIN 53 402, Angabe in mg KOH/g Substanz.

OH-Zahl (OHZ):

Acylierung mit Acetanhydrid/Pyridin im Druckrohr, Hydrolyse und Titration mit KOH-Lösung (analog DIN 53 402); Angabe in mg KOH/g Substanz.

Amin-Zahl (AZ):

Protentiometrische Titration in Eisessig/Dioxan mit 0,1 n HClO$_4$; Angabe in mg KOH/g Substanz.

Die in den Beispielen angegebenen Teile und Prozente sind, soweit nicht anders angegeben, Gewichtsteile bzw. Gewichtsprozente.

## Beispiel 1

120 Teile Dicyclopentadien (DCPD), Reinheit 95%, 30 Teile Acetylendicarbonsäure und 37,5 Teile Xylol werden in einem Rührautoklaven unter Stickstoff 1 Stunde auf 270°C erhitzt. Anschließend wird der Ansatz bei 200°C und 10 mbar entgast. Die Ausbeute beträgt 120 Teile. Das resultierende braune Harz hat das Molekulargewicht 740, die Jodzahl 83, den Erweichungspunkt 112°C und die Säurezahl 98.

Die gleiche Verfahrensweise wird bei den nachstehend tabellarisch zusammengefaßten Beispielen angewandt.

Abkürzungen:

| | | |
|---|---|---|
| DCPD | = | Dicyclopentadien |
| CPD | = | Cyclopentadien |
| MSA | = | Maleinsäureanhydrid |
| THF | = | Tetrahydrofuran |
| n. b. | = | nicht bestimmt |

Beispiele 2 bis 8

| Nr. | Einsatzstoffe (Teile) | | Reaktion (°C) | (Stunden) | Ausbeute (Teile) | $\overline{M}_n$ | JZ | SZ | OHZ | AZ | % N | % Cl | EP (°C) |
|---|---|---|---|---|---|---|---|---|---|---|---|---|---|
| 2 | 120 | DCPD 95%ig | | | | | | | | | | | |
|  | 30 | 1-Ethinylcyclo-hexylamin | | | | | | | | | | | |
|  | 37,5 | Xylol | 270 | 1 | 121 | 450 | 84 | — | — | 76 | — | — | 20 |
| 3 | 120 | DCPD 95%ig | | | | | | | | | | | |
|  | 30 | Butin-3-chlorid-2 | | | | | | | | | | | |
|  | 37,5 | Xylol | 280 | 0,5 | 109 | 600 | 26 | — | — | — | — | 6,5 | 90 |
| 4 | 120 | CPD | | | | | | | | | | | |
|  | 30 | Propargylchlorid | | | | | | | | | | | |
|  | 37,5 | Xylol | 270 | 1 | 107 | 690 | 22 | — | — | — | — | 7,2 | 116 |
| 5 | 120 | DCPD 95%ig | | | | | | | | | | | |
|  | 30 | 4-Diethylamino-butin-2-ol-1 | 270 | 2 | 114 | 590 | 46 | — | — | n. b. | 4,1 | — | 72 |
| 6 | 120 | CPD | | | | | | | | | | | |
|  | 30 | 5-Diethylamino-pentin-3-ol-2 | 270 | 2 | 118 | 580 | 81 | — | — | n. b. | 5,5 | — | 84 |
| 7 | 75 | DCPD 95%ig | | | | | | | | | | | |
|  | 75 | Propargylalkohol | | | | | | | | | | | |
|  | 37,5 | Toluol | 270 | 1 | 144 | 830 | 39 | — | 96 | — | — | — | 150 |

Fortsetzung

| Nr. | Einsatzstoffe (Teile) | | Reaktion (°C) | (Stunden) | Ausbeute (Teile) | $\overline{M}_n$ | JZ | SZ | OHZ | AZ | % N | % Cl | EP (°C) |
|---|---|---|---|---|---|---|---|---|---|---|---|---|---|
| 8 | 75 | CDPD 95%ig | | | | | | | | | | | |
| | 75 | Butin-2-diol-1,4 | | | | | | | | | | | |
| | 15 | Ethylbenzol | 260 | 2 | 122 | 500 | 117 | — | 145 | — | — | — | 80 |

Beispiele 9 bis 15

| Nr. | Einsatzstoffe (Teile) | | Reaktion (°C) | (Stunden) | Ausbeute (Teile) | $\overline{M}_n$ | JZ | SZ | OHZ | EP (°C) |
|---|---|---|---|---|---|---|---|---|---|---|
| 9 | 75 | DCPD 85%ig | | | | | | | | |
| | 75 | 2-Methylbutin(-3)-ol-2 | | | | | | | | |
| | 50 | Cyclohexan | 290 | 1 | 90 | 300 | 181 | — | 48 | Öl |
| 10 | 75 | DCPD 85%ig | | | | | | | | |
| | 75 | 1-Ethinylcyclohexanol (1) | 270 | 1 | 90 | 310 | 145 | — | 45 | Öl |
| 11 | 75 | DCPD 85%ig | | | | | | | | |
| | 75 | 2-Methylbutin(3)-ol-2 | | | | | | | | |
| | 75 | Xylol | 300 | 10 | 122 | 370 | 90 | — | 111 | 45 |
| 12 | 80 | DCPD 95%ig | | | | | | | | |
| | 40 | Propargylalkohol | | | | | | | | |
| | 30 | Xylol | 230 | 1 | 7 | n. b. | n. b. | — | n. b. | 44 |

Fortsetzung

| Nr. | Einsatzstoffe (Teile) | | Reaktion (°C) | (Stunden) | Ausbeute (Teile) | $\overline{M}_n$ | JZ | SZ | OHZ | EP (°C) |
|---|---|---|---|---|---|---|---|---|---|---|
| 13 | 65 | DCPD 95%ig | | | | | | | | |
| | 55 | Propargylalkohol | | | | | | | | |
| | 6 | t-Butylhydroperoxid | | | | | | | | |
| | 30 | Xylol | 230 | 1,5 | 72 | n. b. | n. b. | — | n. b. | 53 |
| 14 | 55 | DCPD 95%ig | | | | | | | | |
| | 47 | Propargylalkohol | | | | | | | | |
| | 26 | Xylol | 230 | 2 | 60 | n. b. | n. b. | — | n. b. | 71 |
| 15 | wie 14 | | 230 | 10 | 107 | n. b. | n. b. | — | n. b. | 115 |

Beispiele 16 bis 20, Vergleichsbeispiel V1

| Nr. | Einsatzstoffe | | Reaktion (°C) | (Stunden) | Ausbeute (Teile) | $\overline{M}_n$ | JZ | SZ | OHZ | EP (°C) |
|---|---|---|---|---|---|---|---|---|---|---|
| 16 | 100 | DCPD 85%ig | | | | | | | | |
| | 30 | Allylalkohol | | | | | | | | |
| | 20 | Propargylalkohol | 270 | 1 | 61 | 420 | 160 | — | 206 | 58 |
| | 37,5 | Solvesso | | | | | | | | |
| V1 | 100 | DCPD 85%ig | | | | | | | | |
| | 50 | Allylalkohol | | | | | | | | |
| | 37,5 | Solvesso | 270 | 1 | 32 | 310 | 160 | — | 145 | 48 |

Fortsetzung

| Nr. | Einsatzstoffe | | Reaktion (°C) | (Stunden) | Ausbeute (Teile) | $M_n$ | JZ | SZ | OHZ | EP (°C) |
|---|---|---|---|---|---|---|---|---|---|---|
| 17 | 100 | DCPD 95%ig | | | | | | | | |
| | 30 | Acetylendicarbonsäure | | | | | | | | |
| | 20 | Propargylalkohol | | | | | | | | |
| | 37,5 | THF | 270 | 1 | 82 | 520 | 83 | 51 | 12 | 107 |
| 18 | 120 | DCPD 95%ig | | | | | | | | |
| | 30 | Propargylalkohol | | | | | | | | |
| | 30 | Benzol | 280 | 4 | 123 | 680 | 167 | — | 104 | 165 |
| 19 | 120 | DCPD 95%ig | | | | | | | | |
| | 30 | 2-Butindiol-1,4 | | | | | | | | |
| | 30 | Benzol | 280 | 4 | 137 | 640 | 181 | — | 147 | 158 |
| 20 | 100 | DCPD 95%ig | | | | | | | | |
| | 30 | Vinylacetat | | | | | | | | |
| | 20 | Propargylakohol | | | | | | | | |
| | 40 | Ethylacetat | 270 | 1 | 116 | 410 | 91 | — | 90 | 144 |

Beispiele 21 bis 25

| Nr. | Einsatzstoffe (Teile) | | Reaktion (°C) | (Stunden) | Ausbeute (Teile) | $\overline{M}_n$ | JZ | SZ | OHZ | EP (°C) |
|---|---|---|---|---|---|---|---|---|---|---|
| 21 | 100 | DCPD 85%ig | | | | | | | | |
| | 30 | MSA | | | | | | | | |
| | 20 | Propargylalkohol | | | | | | | | |
| | 40 | Methylethylketon | 270 | 1 | 135 | 300 | 108 | 135 | 93 | 25 |
| 22 | 100 | DCPD 85%ig | | | | | | | | |
| | 30 | Styrol | | | | | | | | |
| | 20 | Propargylalkohol | | | | | | | | |
| | 40 | Toluol | 270 | 1 | 95 | 300 | 124 | — | 95 | 20 |
| 23 | 100 | DCPD 95%ig | | | | | | | | |
| | 30 | Methylmethacrylat | | | | | | | | |
| | 20 | Propargylalkohol | | | | | | | | |
| | 40 | Toluol | 270 | 1 | 120 | 430 | 98 | — | 125 | 82 |

Fortsetzung

| Nr. | Einsatzstoffe (Teile) | | Reaktion (°C) | (Stunden) | Ausbeute (Teile) | $M_n$ | JZ | SZ | OHZ | EP (°C) |
|---|---|---|---|---|---|---|---|---|---|---|
| 24 | 100 | DCPD 95%ig | | | | | | | | |
| | 30 | Phenol | | | | | | | | |
| | 20 | Propargylalkohol | | | | | | | | |
| | 40 | Toluol | 270 | 1 | 128 | 520 | 79 | n. b. | 106 | 87 |
| 25 | 80 | DCPD 95%ig | | | | | | | | |
| | 30 | Styrol | | | | | | | | |
| | 20 | Vinylacetat | | | | | | | | |
| | 20 | Propargylalkohol | | | | | | | | |
| | 40 | Toluol | 270 | 1 | 109 | 610 | 68 | — | 102 | 117 |

0 039 787

In zwei Kontrollversuchen wurde überprüft, ob die Polymerisationsprodukte noch unreagierte Alkinverbindungen enthalten.

Harze Nr. 18 und 19 wurden zur Bestimmung des $C \equiv C$-Gehaltes mit 0,1 n $AgNO_3$-Lösung titriert; der Verbrauch ist jeweils 0,6 ml/g Substanz, was der Fehlergrenze entspricht. Daraus läßt sich entnehmen, daß die acetylenisch ungesättigten Verbindungen unter Ausbildung von Kohlenstoff-Einfach- bzw. Doppelbindungen mit DCPD copolymerisieren.

Wie das Beispiel 16 und das Vergleichsbeispiel VI zeigen, führt die Verwendung von Propargylanstelle Allylalkohol unter gleichen Reaktionsbedingungen zu höherer Harzausbeute, erhöhter OH-Zahl und höherem Molekulargewicht, was ebenfalls den Vorteil des erfindungsgemäßen Verfahrens demonstriert.

## Patentansprüche

1. Verfahren zur Herstellung von Cyclopentadiencopolymerisaten, dadurch gekennzeichnet, daß

a) 10 bis 99 Gew.-% Cyclopentadien, Dicyclopentadien, Tri- und Tetracyclopentadien, deren $C_1$- bis $C_3$-Alkylderivate oder Codimere des Cyclopentadiens mit 4 bis 5 Kohlenstoffatome enthaltenden Dienen,
b) 1 bis 50 Gew.-% acetylenisch ungesättigte Verbindungen sowie
c) 0 bis 40 Gew.-% anderer copolymerisierbarer olefinisch ungesättigter Monomerer,

mit der Maßgabe, daß die Summe der unter a) bis c) genannten Prozentzahlen 100 ist, bei 200 bis 320°C miteinander umgesetzt werden.

2. Verfahren nach Anspruch 1, dadurch gekennzeichnet, daß die Komponenten a), b) und c) gegebenenfalls zunächst einer Diels-Alder-Reaktion unterworfen und dann bei 200 bis 320°C thermisch oder unter Zusatz von Radikalbildnern polymerisiert werden.

3. Verfahren nach Anspruch 1 oder 2, dadurch gekennzeichnet, daß als acetylenisch ungesättigte Verbindung (b) Acetylen oder solche Verbindungen verwendet werden, die neben mindestens einer Alkinylgruppe mindestens eine Hydroxyl-, Amino-, Carboxyl-, Aldehyd-, Alkyl-, Aryl-, Aralkylgruppe oder einen Halogenrest enthalten.

4. Verfahren nach einem der vorhergehenden Ansprüche, dadurch gekennzeichnet, daß als Komponente (b) mindestens eine Verbindung aus der Gruppe bestehend aus Propargylalkohol, Butin-2-diol-1,4, 1-Ethinylcyclohexanol, Acetylendicarbonsäure, 1-Ethinylcyclohexylamin, 4-Diethyl-amino-butin-2-ol-1, 5-Diethylaminopentin-3-ol-2, 2-Methylbutin-3-ol-2, Butin-3-chlorid-2 und Propargylchlorid verwendet wird.

## Claims

1. A process for the preparation of a cyclopentadiene copolymer, wherein

a) from 10 to 99% by weight of cyclopentadiene, dicyclopentadiene, tricyclopentadiene, tetracyclopentadiene, their $C_1 - C_3$-alkyl derivatives or co-dimers of cyclopentadiene with a diene of 4 or 5 carbon atoms,
b) from 1 to 50% by weight of acetylenically unsaturated compounds, and
c) from 0 to 40% by weight of other copolymerizable olefinically unsaturated monomers

are reacted together at 200 − 320°C, the sum of the percentages a), b) and c) being 100.

2. A process as claimed in claim 1, wherein components a), b) and c) are first optionally subjected to a Diels-Alder reaction and are then polymerized at from 200 to 320°C, either thermally or with addition of a source of free radicals.

3. A process as claimed in claim 1 or 2, wherein the acetylenically unsaturated compound b) used is acetylene or a compound which in addition to one or more alkynyl groups contains one or more hydroxyl, amino, carboxyl, aldehyde, alkyl, aryl or aralkyl groups or halogen atoms.

4. A process as claimed in any of the preceding claims, wherein component b) consists of one or more compounds from the group comprising propargyl alcohol, but-2-yne-1,4-diol, 1-ethynylcyclohex-anol, acetylenedicarboxylic acid, 1-ethynylcyclohexylamine, 4-di-ethylaminobut-2-yn-1-ol, 5-diethyl-aminopent-3-yn-2-ol, 2-methylbut-3-n-2-ol, but-3-yne-2-chloride and propargyl chloride.

## Revendications

1. Procédé de préparation de copolymères de cyclopentadiene, caractérisé par le fait qu'on fait réagir entre eux, à une température de 200 à 320°C,

a) 10 à 99% en poids de cyclopentadiene, dicyclopentadiene, tri et tétracyclopentadiene, leurs dérivés alkyle en $C_1$ à $C_3$ ou des codimères du cyclopentadiene à dienes contenant 4 à 5 atomes de carbone,

b) 1 à 50% en poids de composés à insaturation acétylénique, ainsi que

c) 0 à 40% en poids d'autres monomères copolymérisables, à insaturation oléfinique,

sous réserve que la somme des pourcentages indiqués sous a) à c) soit égale à 100.

2. Procédé selon la revendication 1, caractérisé par le fait que les composants a), b) et c) sont éventuellement soumis d'abord à une réaction de Diels-Alder, puis sont polymérisés à 200 à 320°C thermiquement ou avec addition de générateurs de radicaux.

3. Procédé selon la revendication 1 ou 2, caractérisé par le fait que l'on utilise, comme composé (b) à insaturation acétylénique, l'acétylène ou des composés qui contiennent, outre au moins un groupe alcényle, au moins un groupe hydroxyle, amino, carboxyle, aldéhyle, alkyle, aryle ou aralkyle ou un reste halogène.

4. Procédé selon l'une des revendications précédentes caractérisé par le fait qu'on utilise, comme composants (b), au moins un composé appartenant au groupe constitué d'alcool propargylique, butyn-2-diol-1,4, 1-éthinylcyclohexanol, acide acétylendicarboxylique, 1-éthinylcyclohexylamine, 4-diéthylamino-butyn-2-ol-1, 5-diéthylaminopentin-3-ol-2, 2-méthylbutyn-3-ol-2, chlorure-2 de butyne-3 et chlorure de propargyle.